# EUROPEAN PATENT SPECIFICATION

(11) **EP 2 768 102 B1**
(45) Date of publication and mention of the grant of the patent: **10.02.2016**
(21) Application number: 13275031.6
(22) Date of filing: 13.02.2013
(51) Int. Cl.: H02H 3/08, H02H 1/06, H01H 33/59, H01H 9/54

(54) **Circuit interruption device**
Stromkreisunterbrechungsvorrichtung
Dispositif d'interruption de circuit

(43) Date of publication of application: 20.08.2014
(73) Proprietor: General Electric Technology GmbH, 5400 Baden (CH)
(72) Inventor: Davidson, Colin Charnock, Stafford Staffordshire ST17 4PS (GB); Whitehouse, Robert Stephen, Walton on the Hill Stafford ST17 0JU (GB)
(74) Representative: Potter Clarkson LLP

(56) References cited:
- EP-A1- 0 660 352
- WO-A1-2011/057675
- DE-U1-202012 100 024

## Description

This invention relates to a circuit interruption device and a circuit interruption device assembly.

In power transmission networks alternating current (AC) power is typically converted to direct current (DC) power for transmission via overhead lines and/or undersea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC to DC power is also utilized in power transmission networks where it is necessary to interconnect AC networks operating at different frequencies. In any such power transmission network, converters are required at each interface between AC and DC power to effect the required conversion.

HVDC converters are vulnerable to DC side faults or other abnormal operating conditions that can present a short circuit with low impedance across the DC power transmission lines or cables. Such faults can occur due to damage or breakdown of insulation, lightning strikes, movement of conductors or other accidental bridging between conductors by a foreign object.

The presence of low impedance across the DC power transmission lines or cables can be detrimental to a HVDC converter. Sometimes the inherent design of the converter means that it cannot limit current under such conditions, resulting in the development of a high fault current exceeding the current rating of the HVDC converter. Such a high fault current not only damages components of the HVDC converter, but also results in the HVDC converter being offline for a period of time. This results in increased cost of repair and maintenance of damaged electrical apparatus hardware, and inconvenience to end users relying on the working of the electrical apparatus. It is therefore important to be able to interrupt the high fault current as soon as it is detected.

A conventional means of protecting a HVDC converter from DC side faults, in cases where the converter control cannot limit the fault current by any other means, is to trip an AC side circuit breaker, thus removing the supply of current that feeds the fault through the HVDC converter to the DC side. This is because there are currently no commercially available HVDC circuit breaker designs. Furthermore, almost all HVDC schemes are currently point-to-point schemes with two HVDC converters connected to the DC side, whereby one HVDC converter acts as a power source with power rectification capability and the other HVDC converter acts as a power load with power inversion capability. Hence, tripping the AC side circuit breaker is acceptable because the presence of a fault in the point-to-point scheme requires interruption of power flow to allow the fault to be cleared.

A new class of HVDC power transmission networks are being considered for moving large quantities of power over long distances, as required by geographically dispersed renewable forms of generation, and to augment existing capabilities of AC power transmission networks with smartgrid intelligence and features that are able to support modern electricity trading requirements.

Such a HVDC power transmission network requires multi-terminal interconnection of HVDC converters, whereby power can be exchanged on the DC side using three or more HVDC converters operating in parallel. Each HVDC converter acts as either a source or sink to maintain the overall input-to-output power balance of the network whilst exchanging the power as required. Faults in the HVDC power transmission network need to be quickly isolated and segregated from the rest of the network in order to enable the network to resume normal power transmission as soon as possible.

Current interruption in conventional AC circuit breakers is carried out when the current reaches a current zero, so as to considerably reduce the difficulty of the interruption task. Thus, in conventional circuit breakers, there is a risk of damage to the current interruption apparatus if a current zero does not occur within a defined time period for interrupting the current. It is therefore inherently difficult to carry out DC current interruption because, unlike AC current in which current zeros naturally occur, DC current cannot naturally reach a current zero.

EP 0 867 998 B1 discloses a solid-state DC circuit breaker comprising a stack of series-connected IGBTs in parallel with a metal-oxide surge arrester. This solution achieves a response time in the range of a few milliseconds but suffers from high steady-state power losses.

WO 2011/057675 A1 discloses a device to break an electrical current flowing through a power transmission or distribution line comprising a parallel connection of a main breaker and a non-linear resistor. The main breaker comprises at least one power semiconductor switch of a first current direction. The device further comprises a series connection of a high speed switch comprising at least one mechanical switch and an auxiliary breaker, the auxiliary breaker having a smaller on-resistance than the main breaker and comprising at least one power semiconductor switch of the first current direction. The series connection is connected in parallel to the parallel connection. In a method using the device, the auxiliary breaker is first opened, thereby commutating the current to the main breaker. Afterwards the high speed switch is opened and the main breaker is then opened, thereby commutating the current to the non-linear resistor. The device can further be used in a current limiting arrangement.

EP 0 660 352 A1 discloses a high power DC breaker for connection in a DC high-voltage line. The breaker has two normally closed and electrically series-connected mechanical breaks adapted to be traversed by the line current and to be opened for breaking the current. A capacitor is connected in parallel with the series connection of the breaks. A semiconductor member is connected in parallel with one of the breaks. Upon opening the breaks, a control member controls the semiconductor member such that a zero crossing of the current through the second break is obtained, whereby the line current is commutated over to the capacitor.

According to a first aspect of the invention, there is provided a circuit interruption device comprising:
a main branch;
a secondary branch having an electrical on-resistance which is higher than an electrical on-resistance of the main branch; and
first and second terminals for connection, in use, to an electrical network, the main and secondary branches extending between the first and second terminals;
wherein the main branch includes a switching apparatus which is switchable to selectively allow current to flow in the main branch in a normal mode of operation or commutate current from the main branch to the secondary branch in a fault mode of operation, and the secondary branch includes at least one switching device, the or each switching device including at least one normally-on switching element, the secondary branch further including a control unit in communication with the or each normally-on switching element, the secondary branch further including a power extraction circuit which is electrically coupled with the control unit,
wherein during the normal mode of operation the or each normally-on switching element is in an on-state to permit the secondary branch to conduct current, and during the fault mode of operation the control unit controls the switching of the or each normally-on switching element to an off-state to inhibit current flow in the secondary branch,
wherein the power extraction circuit extracts power from current flowing in the secondary branch to drive the control unit.

In the normal mode of operation of the circuit interruption device, the switching apparatus is closed and so current from the electrical network flows in the main branch. Meanwhile, although the or each normally-on switching element is in an on-state to permit the secondary branch to conduct current in the normal mode of operation, little to no current flows in the secondary branch as a consequence of the secondary branch having an electrical on-resistance which is higher than an electrical on-resistance of the main branch.

In the event of a fault occurring in the electrical network resulting in high fault current flowing in the main branch, the switching apparatus is opened to commutate the fault current from the main branch to the secondary branch in the fault mode of operation of the circuit interruption device. Since the or each normally-on switching element was already in an on-state to permit the secondary branch to conduct current prior to occurrence of the fault, commutation of the fault current from the main branch to the secondary branch takes place instantaneously. After a certain period of time following commutation of the fault current from the main branch to the secondary branch, the control unit turns off the or each normally-on switching element to complete the circuit interruption process. It will be appreciated that the circuit interruption device may optionally further include one or more energy absorption or dissipation elements, e.g. a snubber circuit or a metal-oxide surge arrestor as described in EP 0 867 998 B1, to assist the circuit interruption procedure.

The aforementioned use and configuration of the or each normally-on switching element in the or each switching device to enable instantaneous commutation of the fault current from the main branch to the secondary branch therefore improves the responsiveness of the circuit interruption device in performing the circuit interruption procedure.

Furthermore the or each normally-on switching element does not need to be energised to be in an on-state. As such, it is not essential to provide constant energisation of the or each normally-on switching element to maintain its on-state in order to permit the secondary branch to conduct current during the normal mode of operation, thus improving the efficiency of the circuit interruption device in terms of operational costs and energy usage.

In contrast, replacing the or each normally-on switching element in the or each switching device with a normally-off switching element would result in a pause between the conduction of the fault current in the main and secondary branches respectively after the switching apparatus is opened, thus inhibiting instantaneous commutation of the fault current from the main branch to the secondary branch. The pause is caused by the time taken to turn on the or each normally-off switching element to permit the secondary branch to conduct current after the switching apparatus is opened.

On the other hand the pause could be eliminated by turning on the or each normally-off switching element to permit the secondary branch to conduct current prior to occurrence of the fault, i.e. during the normal mode of operation. However, a normally-off switching element must be energised to enable its turn-on, i.e. its switching to an on-state, and so such an approach would require constant energisation of the or each normally-off switching element to maintain its on-state to permit the secondary branch to conduct current during the normal mode of operation, thereby resulting in higher operational costs and lower energy efficiency.

As an alternative to providing constant energisation of the or each normally-off switching element, the or each normally-off switching element could be associated with a power supply arrangement which is capable of instantaneously generating power to enable the control unit to turn on the or each normally-on switching element and thereby permit the secondary branch to instantaneously conduct current in response to the opening of the switching apparatus. Although such a power supply arrangement could reduce the operational costs associated with the provision of constant energisation of the or each normally-off switching element, it can be complex and expensive to design and construct the power supply arrangement to be compatible for use with a circuit interruption device requiring high levels of responsiveness and reliability, especially when the circuit interruption device requires a high number of switching devices in its secondary branch.

The turn-off of the or each normally-on switching element of the or each switching device in the fault mode of operation requires energisation of the or each normally-on switching element. Such energisation is provided by the power extraction circuit which, by way of its use to electrically couple the secondary branch and the control unit, extracts power from current flowing in the secondary branch to drive the control unit. This thereby provides the circuit interruption device with the capability to locally derive power for driving the control unit to turn off the or each normally-on switching element.

In contrast, adding a separate power source to the circuit interruption device or hardware for supplying power from ground potential to the control unit would not only increase the structural complexity of the circuit interruption device, but also increase the cost and footprint of the circuit interruption device. Furthermore the duration of the fault mode of operation is much shorter than the duration of normal mode of operation. This means that the separate power source or hardware would only be used infrequently, and so it becomes inefficient in terms of operational costs and energy usage to operate the separate power source or hardware.

The configuration of the circuit interruption device according to the invention therefore results in a cost- and energy-efficient circuit interruption device which can be designed to rapidly and reliably carry out a circuit interruption procedure in response to an occurrence of a fault in an associated electrical network.

The number of switching devices and normally-on switching elements in the secondary branch may vary depending on the design requirements, e.g. voltage and current ratings, losses, response time, of the associated power application. For example, the secondary branch may include a plurality of series-connected switching devices and/or each switching device may include a plurality of parallel-connected normally-on switching elements.

The type of normally-on switching element(s) used in the or each switching device may also vary depending on the design requirements of the associated power application. For example, at least one normally-on switching element may be a semiconductor switching element. The semiconductor switching element may be a depletion-mode switching element, e.g. a depletion-mode MOSFET or JFET. At least one normally-on switching element may include a wide-band-gap semiconductor material such as, but not limited to, silicon carbide, gallium nitride or diamond.

The power extraction circuit may be configured to extract power from current flowing in the secondary branch during the normal and/or fault modes of operation of the circuit interruption device as follows.

For example, during the fault mode of operation, following commutation of current from the main branch to the secondary branch, the power extraction circuit may extract power from current flowing in the secondary branch to drive the control unit,

In embodiments of the invention, the power extraction circuit may include an electrical block which is electrically coupled with the control unit, the electrical block being connected in the secondary branch such that a voltage drop is generated across the electrical block when current flows in the secondary branch. The presence of the voltage drop across the electrical block allows the power extraction circuit to extract power from the current flowing in the secondary branch in the normal and/or fault modes of operation.

Optionally the electrical block may include at least one resistive element.

In the fault mode of operation, although the flow of current through the or each resistive element results in resistive losses, the short duration of the fault mode of operation means that the resistive losses would be minimal.

Further optionally the electrical block may include at least one inductive element, e.g. a reactor or a winding of a current transformer.

When the fault current is commutated from the main branch to the secondary branch, the secondary branch sees a current pulse with a short duration and a high rate of change of current. The high rate of change of current of the current pulse induces a voltage drop across the or each inductive element and thereby enables the power extraction circuit to extract power from the current flowing in the secondary branch.

The use of a current transformer in the electrical block obviates the need for any voltage isolation or "level shifting" which would normally be required for switching devices with an electrical block including a resistor or reactor.

The electrical block may be connected in the secondary branch in various ways to enable generation of a voltage drop across the electrical block when current flows in the secondary branch during the normal and/or fault modes of operation. For example, the electrical block may be connected in series with at least one normally-on switching element.

In further embodiments of the invention employing the use of an electrical block, the electrical block may include at least one normally-on switching element. This allows the power extraction circuit to extract power from the current flowing in the secondary branch by utilising the on-state voltage appearing across the or each corresponding normally-on switching element when current flows in the secondary branch in the normal and/or fault modes of operation.

According to an embodiment of the invention, there is provided a circuit interruption device assembly comprising:
a circuit interruption device according to any embodiment of the first aspect of the invention; and
a current injection circuit including:
   at least one current source for injecting a current into the secondary branch of the circuit interruption device; and
   at least one filter limb operably connected to the secondary branch of the circuit interruption device to inhibit the injected current from flowing, in use, into the electrical network.

In use, the or each current source can be controlled to inject a current into the secondary branch in the normal and/or fault modes of operation. The provision of the current injection circuit enables the power extraction circuit to reliably extract a required amount of power from the current flowing in the secondary branch through the injection of a suitable current, thus improving the reliability of the circuit interruption device.

When the circuit interruption device assembly includes a circuit interruption device employing the use of an electrical block, a voltage drop is generated across the electrical block when the injected current flows in the secondary branch, thereby enabling the power extraction circuit to extract power from the injected current flowing in the secondary branch. For example, when the electrical block includes at least one inductive element, the or each current source may be configured to inject a ripple current into the secondary branch in order to induce a voltage drop across the or each inductive element.

The or each filter limb may include at least one inductive element, at least one capacitive element and/or at least one resistive element.

The or each filter limb defines a line trap which prevents the injected current from entering the associated electrical network. The or each filter limb may be operably connected to the secondary branch of the circuit interruption device in different configurations to inhibit the injected current from flowing, in use, into the electrical network. Examples of the different configurations are described as follows.

In embodiments of the invention, the current injection circuit may include:
a pair of first filter limbs, each first filter limb having first and second ends, the first end of each first filter limb being connectable to the electrical network;
a pair of second filter limbs, each second filter limb having first and second ends, the first end of each second filter limb being connectable to ground or the electrical network, the secondary branch of the circuit interruption device being connected with the second filter limbs to define a π-configuration of the secondary branch and second filter limbs in which the secondary branch extends between the second ends of the second filter limbs, the π-configuration being connected between the first filter limbs such that the second end of each first filter limb is connected to the second end of a respective one of the second filter limbs.

In such embodiments, the first end of each first filter limb may be connected to a respective one of the first and second terminals of the circuit interruption device. This prevents the injected current from flowing in the main branch of the circuit interruption device.

In other such embodiments, the second end of each first filter limb may be connected to a respective one of the first and second terminals of the circuit interruption device. When the second end of each first filter limb is connected to a respective one of the first and second terminals of the circuit interruption device, the circuit interruption device assembly may further include a pair of third filter limbs, each third filter limb having first and second ends, wherein the first end of each third filter limb is connected to the first end of a respective one of the second filter limbs, and the second end of each third filter limb is connectable to the electrical network. Optionally the circuit interruption device assembly may further include an additional circuit interruption device according to any embodiment of the first aspect of the invention, the additional circuit interruption device being connected between the first ends of the second filter limbs. Such circuit interruption device assemblies may be directly connected between different poles of the associated electrical network.

The location of the or each current source in the current injection circuit may vary. For example, at least one of the limbs, e.g. at least one of the second filter limbs, may include a current source and/or at least one current source may be connected in series with the first and second terminals between the second ends of the second filter limbs.

The current injection circuit may include a plurality of current sources. This permits redundancy to be added to the current injection circuit for reliability reasons. Nonetheless it will be appreciated that the current injection circuit can be operated using a single current source.

In embodiments employing the use of a current injection circuit, the circuit interruption device assembly may include an energy storage element for storing and releasing power,
wherein during the normal mode of operation the or each current source injects a current into the secondary branch and the power extraction circuit extracts power from the injected current for storage in the energy storage element, and
wherein during the fault mode of operation the energy storage element releases the stored power to drive the control unit.

The provision of an energy storage element enables the circuit interruption device assembly to store power during the normal mode of operation to ensure that a required amount of power is available to drive the control unit during the fault mode of operation. This reduces the reliance on the capability of the power extraction circuit to extract sufficient power solely from the fault current flowing in the secondary branch during the fault mode of operation, thus improving the reliability of the circuit interruption device. The energy storage element may be rated so that the stored power on its own or in combination with power extracted from the fault current in the fault mode of operation is sufficient to drive the control unit.

The energy storage element may be integral with the control unit, or may be a separate component from the control unit.

In further embodiments employing the use of a current injection circuit, during the fault mode of operation, the or each current source may inject a current into the secondary branch. The or each current source may be rated so that the injected current on its own or in combination with the fault current is sufficient to enable the power extraction circuit to extract the required amount of power from current flowing in the secondary branch to drive the control unit.

It will be appreciated that, in embodiments employing the use of a plurality of normally-on switching elements, the circuit interruption device may include a single control unit in communication with a plurality of normally-on switching elements, or a plurality of control units in which each control unit is in communication with a respective one of the plurality of normally-on switching elements.

It will also be appreciated that, in embodiments employing the use of a plurality of control units, the circuit interruption device may include a single power extraction circuit which is electrically coupled with each of the plurality of control units, or a plurality of power extraction circuits in which each power extraction circuit is electrically coupled with a respective one of the plurality of control units.

Furthermore the number of control units and power extraction circuits in the circuit interruption device may correspond to the number of switching devices and/or normally-on switching elements.

Preferred embodiments of the invention will now be described, by way of example, with reference to the accompanying drawings in which:
Figure 1 shows, in schematic form, a circuit interruption device according to a first embodiment of the invention;
Figure 2 shows, in schematic form, the structure of a switching device forming part of a secondary branch of the circuit interruption device of Figure 1;
Figure 3 shows, in schematic form, the structure of a switching device forming part of a secondary branch of a circuit interruption device according to a second embodiment of the invention;
Figure 4 shows, in schematic form, the structure of a switching device forming part of a secondary branch of a circuit interruption device according to a third embodiment of the invention;
Figure 5 shows, in schematic form, the structure of a switching device forming part of a secondary branch of a circuit interruption device according to a fourth embodiment of the invention; and
Figure 6 shows a circuit interruption device assembly according to a fifth embodiment of the invention;
Figure 7 shows a circuit interruption device assembly according to a sixth embodiment of the invention;
Figure 8 shows a circuit interruption device assembly according to a seventh embodiment of the invention; and
Figure 9 shows a circuit interruption device assembly according to an eighth embodiment of the invention.

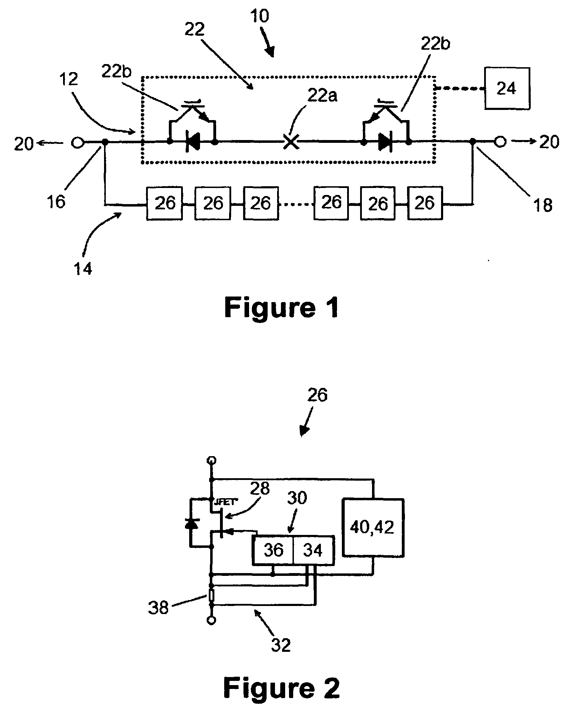

A first circuit interruption device 10 according to a first embodiment of the invention is shown in Figure 1.

The first circuit interruption device 10 comprises a main branch 12, a secondary branch 14, and first and second terminals 16,18. Each of the main and secondary branches 12,14 extends between the first and second terminals 16,18.

In use, the first and second terminals 16,18 are connected to a DC electrical network 20.

The main branch 12 includes a switching apparatus 22 which includes a mechanical switching element 22a, e.g. a vacuum interrupter switch, connected in series with a plurality of semiconductor switching elements 22b in the form of insulated gate bipolar transistors (IGBT). The first circuit interruption device 10 further includes a main control unit 24 to control the switching of the switching apparatus 22.

In other embodiments of the invention, it is envisaged that the type and number of switching elements in the switching apparatus 22 may vary depending on the design requirements of the main branch 12.

The secondary branch 14 is connected across the main branch 12 and includes a plurality of series-connected first switching devices 26.

Figure 2 shows, in schematic form, the structure of each first switching device 26. Each first switching device 26 includes a normally-on switching element 28, a secondary control unit 30 and a power extraction circuit 32.

The normally-on switching element 28 of each first switching device 26 is in the form of a depletion-mode junction field effect transistor (JFET). It is envisaged that, in other embodiments of the invention, each depletion-mode JFET may include a wide-band-gap semiconductor material such as silicon carbide, gallium nitride, diamond or any other suitable semiconductor material and/or each depletion-mode JFET may be replaced by a different type of normally-on switching element, e.g. another type of depletion-mode switching element.

Optionally each first switching device 26 may include a plurality of parallel-connected normally-on switching elements, instead of a single normally-on switching element 28, to vary the current rating of each first switching device 26.

The secondary control unit 30 of each first switching device 26 includes a power supply unit 34 and control electronics 36 to control the switching of the corresponding normally-on switching element 28.

The power extraction circuit 32 of each first switching device 26 includes an electrical block which includes a resistor 38. The resistor 38 of each first switching device 26 is connected in series with the corresponding normally-on switching element 28. The power supply unit 34 of each secondary control unit 30 is electrically connected across the corresponding electrical block. In this manner the power extraction circuit 32 of each first switching device 26 is electrically coupled with the corresponding secondary control unit 30.

Each first switching device 26 further includes a snubber circuit 40 and an energy absorption element 42, each of which is connected across the corresponding normally-on switching element 28. Each energy absorption element 42 is in the form of a surge arrestor.

The components of the main and secondary branches 12,14 are rated so that the secondary branch 14 has an electrical on-resistance which is higher than an electrical on-resistance of the main branch 12.

Operation of the first circuit interruption device 10 of Figure 1 to interrupt current in the DC electrical network 20 is described as follows.

In the normal mode of operation of the first circuit interruption device 10, the switching apparatus 22 is closed and so current from the DC electrical network 20 flows in the main branch 12. Meanwhile each normally-on switching element 28 is in an on-state to permit the secondary branch 14 to conduct current in the normal mode of operation. Little to no current flows in the secondary branch 14 as a consequence of the secondary branch 14 having an electrical on-resistance which is higher than an electrical on-resistance of the main branch 12.

A fault or other abnormal operating condition in the DC electrical network 20 may lead to high fault current flowing through the DC electrical network 20.

In response to an event of high fault current in the DC electrical network 20, the main control unit 24 controls the switching of the switching apparatus 22 to open in order to commutate current from the main branch 12 to the secondary branch 14 in a fault mode of operation of the first circuit interruption device 10. Since each normally-on switching element 28 was already in an on-state to permit the secondary branch 14 to conduct current prior to occurrence of the fault, commutation of the fault current from the main branch 12 to the secondary branch 14 takes place instantaneously.

At this stage the secondary branch 14 sees a current pulse with a short duration and a high rate of change of current, typically 1 to 10 A/µs, and so the flow of current in the secondary branch 14 results in a voltage drop appearing across the resistor 38 of each first switching device 26. The resistor 38 of each first switching device 26 is rated such that the voltage drop appearing across the resistor 38 of each first switching device 26 in the fault mode of operation is suitable to drive the corresponding secondary control unit 30, i.e. power the power supply unit 34 to enable the control electronics 36 to turn off the corresponding normally-on switching element 28. In this manner the power extraction circuit 32 of each first switching device 26 is able to locally derive power for driving the corresponding secondary control unit 30.

After a certain period of time following commutation of the fault current from the main branch 12 to the secondary branch 14, the control electronics 36 of the secondary control unit 30 of each first switching device 26 turns off the corresponding normally-on switching element 28 to inhibit current flow in the secondary branch 14 and thereby commutate the fault current to the corresponding snubber circuit 40 and energy absorption element 42 to complete the circuit interruption procedure.

The aforementioned use and configuration of the plurality of normally-on switching elements 28 in the secondary branch 14 to enable instantaneous commutation of the fault current from the main branch 12 to the secondary branch 14 therefore improves the responsiveness of the first circuit interruption device 10 in performing the circuit interruption procedure.

Furthermore a normally-on switching element 28 does not need to be energised to be in an on-state. As such, it is not essential to provide constant energisation of the or each normally-on switching element 28 to maintain its on-state in order to permit the secondary branch 14 to conduct current during the normal mode of operation, thus improving the efficiency of the first circuit interruption device 10 in terms of operational costs and energy usage.

The configuration of the first circuit interruption device 10 of Figure 1 therefore results in a cost- and energy-efficient circuit interruption device which can be designed to rapidly and reliably carry out a circuit interruption procedure in response to an occurrence of a fault in the DC electrical network 20.

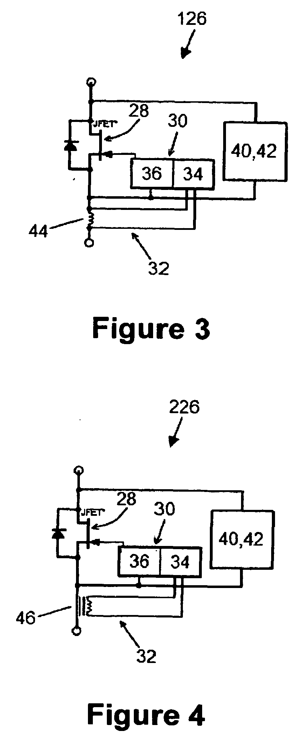

A second switching device 126 forming part of a secondary branch 14 of a second circuit interruption device according to a second embodiment of the invention is shown in Figure 3. The secondary branch 14 of the second circuit interruption device includes a plurality of series-connected second switching devices 126. The second circuit interruption device is similar in terms of structure and operation to the first circuit interruption device 10 of Figure 1, each second switching device 126 as shown in Figure 3 is similar in terms of structure and operation to each first switching device 26 as shown in Figure 2, and like features share the same reference numerals.

Each second switching device 126 differs from each first switching device 26 in that the electrical block of each second switching device 126 includes a reactor 44 in place of the resistor 38 shown in Figure 2.

Following commutation of the fault current from the main branch 12 to the secondary branch 14, the high rate of change of current of the current pulse induces a voltage drop across the reactor 44 of each second switching device 126 and thereby enables the power extraction circuit 32 of each second switching device 126 to extract power from the current flowing in the secondary branch 14 to drive the corresponding secondary control unit 30. The reactor 44 of each second switching device 126 is rated such that the voltage drop appearing across the reactor 44 of each second switching device 126 in the fault mode of operation is suitable to drive the corresponding secondary control unit 30.

A third switching device 226 forming part of a secondary branch 14 of a third circuit interruption device according to a third embodiment of the invention is shown in Figure 4. The secondary branch 14 of the third circuit interruption device includes a plurality of series-connected third switching devices 226. The third circuit interruption device is similar in terms of structure and operation to the second circuit interruption device, each third switching device 226 as shown in Figure 4 is similar in terms of structure and operation to each second switching device 126 as shown in Figure 3, and like features share the same reference numerals.

Each third switching device 226 differs from each second switching device 126 in that the electrical block of each third switching device 226 includes a first winding of a current transformer 46 in place of the reactor 44 as shown in Figure 3.

Following commutation of the fault current from the main branch 12 to the secondary branch 14, the high rate of change of current of the current pulse induces a voltage drop across the first winding of the current transformer 46 of each third switching device 226. This in turn induces a voltage drop across the corresponding second winding and thereby enables the power extraction circuit 32 of each third switching device 226 to extract power from the current flowing in the secondary branch 14 to drive the corresponding secondary control unit 30. The current transformer 46 of each third switching device 226 is rated such that the voltage drop appearing across its first winding in the fault mode of operation is suitable to drive the corresponding secondary control unit 30.

The use of the current transformer 46 in the electrical block of each third switching device 226 obviates the need for any voltage isolation or "level shifting" which would normally be required for switching devices with an electrical block including a resistor or reactor.

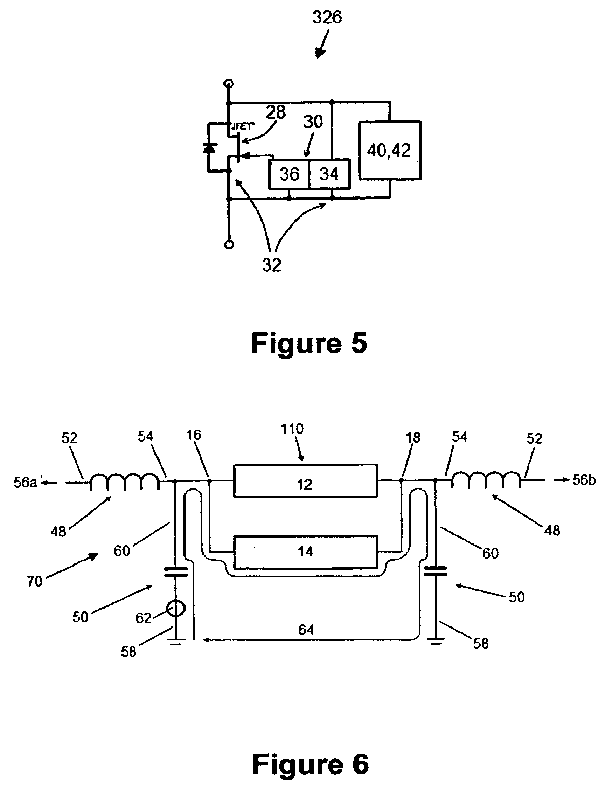

A fourth switching device 326 forming part of a secondary branch 14 of a fourth circuit interruption device according to a fourth embodiment of the invention is shown in Figure 5. The secondary branch 14 of the fourth circuit interruption device includes a plurality of series-connected fourth switching devices 326. The fourth circuit interruption device is similar in terms of structure and operation to the first circuit interruption device 10 of Figure 1, each fourth switching device 326 as shown in Figure 5 is similar in terms of structure and operation to each first switching device 26 as shown in Figure 2, and like features share the same reference numerals.

Each fourth switching device 326 differs from each first switching device 26 in that:
- each fourth switching device 326 omits the resistor 38 as shown in Figure 2;
- the electrical block of each fourth switching device 326 includes the normally-on switching element 28.

In this manner the power extraction circuit 32 of each fourth switching device 326 is able to extract power from the current flowing in the secondary branch 14 by utilising the on-state voltage appearing across the corresponding normally-on switching element 28 when the fault current flows in the secondary branch 14 in the fault mode of operation.

A first circuit interruption device assembly 70 according to a fifth embodiment of the invention is shown in Figure 6.

The first circuit interruption assembly 70 includes a fifth circuit interruption device 110. A secondary branch 14 of the fifth circuit interruption device 110 includes a plurality of series-connected fifth switching devices. The fifth circuit interruption device 110 is similar in terms of structure and operation to the second circuit interruption device, each fifth switching device is similar in terms of structure and operation to each second switching device 126 as shown in Figure 3, and like features share the same reference numerals.

The first circuit interruption device assembly 70 further includes a current injection circuit. The current injection circuit includes a pair of first filter limbs 48 and a pair of second filter limbs 50.

Each first filter limb 48 has first and second ends 52,54, and includes an auxiliary reactor. In use, the first end 52 of each first filter limb 48 is connected to a pole of a respective one of a pair of DC electrical networks 56a,56b. The second end 54 of each first filter limb 48 is connected to a respective one of the first and second terminals 16,18 of the fifth circuit interruption device 110.

Each second filter limb 50 has first and second ends 58,60, and includes an auxiliary capacitor. In use, the first end 58 of each second filter limb 50 is connected to ground.

The secondary branch 14 of the fifth circuit interruption device 110 is connected with the second filter limbs 50 to define a π-configuration of the secondary branch 14 and second filter limbs 50 in which the secondary branch 14 extends between the second ends 60 of the second filter limbs 50. The π-configuration is connected between the first filter limbs 48 such that the second end 54 of each first filter limb 48 is connected to the second end 60 of a respective one of the second filter limbs 50.

The current injection circuit further includes a current source in the form of a driving transformer 62. The driving transformer 62 forms part of one of the second filter limbs 50 such that that second filter limb 50 includes a series connection of a driving transformer 62 and an auxiliary capacitor. In addition the driving transformer 62 is connected between the corresponding auxiliary capacitor and ground.

Connecting the driving transformer 62 on the ground side potential of the current injection circuit obviates the need to install high voltage insulation on the driving transformer 62, thereby decreasing its manufacturing cost.

It is envisaged that, in other embodiments, the driving transformer 62 may be connected at the other side of the auxiliary capacitor which is not connected to ground, i.e. the high voltage side potential of the current injection circuit.

In other embodiments, it is envisaged that the current injection circuit may include a plurality of current sources. This permits redundancy to be included in the current injection circuit for reliability reasons.

In the fault mode of operation of the fifth circuit interruption device 110, the driving transformer 62 is controlled to inject a ripple current into the secondary branch 14. The flow of the ripple current in the secondary branch 14 induces a voltage drop across the reactor of the electrical block of each fifth switching device and thereby enables the power extraction circuit of each fifth switching device to extract power from the ripple current flowing in the secondary branch 14.

The first and second filter limbs 48,50 define line traps which provide a current loop return path 64 which passes through the fifth circuit interruption device 110 and the second filter limbs 50. The inclusion of the line traps in the current injection circuit prevents the injected ripple current from entering the DC electrical networks 56a,56b. The line traps shown in Figure 6 use first order filter networks but may have higher order filtering with multiple inductive, capacitive and resistive elements in place of the pairs of auxiliary reactors and auxiliary capacitors shown in Figure 6.

The current injection circuit therefore enables the power extraction circuit of each fifth switching device to reliably extract a required amount of power from the current flowing in the secondary branch 14 through the injection of a suitable ripple current, thus improving the reliability of the fifth circuit interruption device 110.

The driving transformer 62 may be rated so that the injected current on its own or in combination with the fault current is sufficient to enable the power extraction circuit to extract the required amount of power from current flowing in the secondary branch 14 to drive each secondary control unit to turn off the corresponding normally-on switching element 28.

It will be appreciated that the current injection circuit of the first circuit interruption device assembly 70 operates in a similar fashion if the reactor of each fifth switching device is replaced by a first winding of a current transformer 46 as shown in Figure 4.

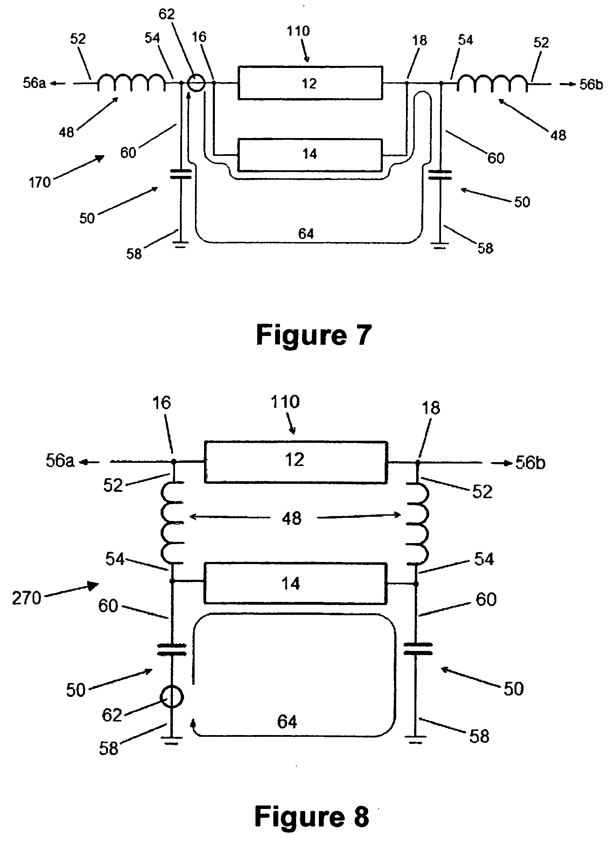

A second circuit interruption device assembly 170 according to a sixth embodiment of the invention is shown in Figure 7. The second circuit interruption device assembly 170 of Figure 7 is similar in structure and operation to the first circuit interruption device assembly 70 of Figure 6, and like features share the same reference numerals.

The second circuit interruption device assembly 170 differs from the first circuit interruption device assembly 70 in that, in the second circuit interruption device assembly 170, the driving transformer 62 is connected to the first terminal 16 of the fifth circuit interruption device 110 such that the driving transformer 62 is connected in series with the first and second terminals 16,18 between the second ends 60 of the second filter limbs 50.

Alternatively, in other embodiments, the driving transformer 62 may be connected to the second terminal 18 of the fifth circuit interruption device 110 such that the driving transformer 62 is connected in series with the first and second terminals 16,18 between the second ends 60 of the second filter limbs 50.
A third circuit interruption device assembly 270 according to a seventh embodiment of the invention is shown in Figure 8. The third circuit interruption device assembly 270 of Figure 8 is similar in structure and operation to the first circuit interruption device assembly 70 of Figure 6, and like features share the same reference numerals.

The third circuit interruption device assembly 270 differs from the first circuit interruption device assembly 70 in that, in the third circuit interruption device assembly 270:
- the first end 52 of each first filter limb 48 is further connected to a respective one of the first and second terminals 16,18 of the fifth circuit interruption device 110;
- the second end 54 of each first filter limb 48 is not connected to a respective one of the first and second terminals 16,18 of the fifth circuit interruption device 110;
- the fifth circuit interruption device 110 further includes a plurality of energy storage elements (not shown) for storing and releasing power, each energy storage element being in the form of a capacitor.

Therefore, the secondary branch 14 and the first filter limbs 48 are connected between the first and second terminals 16,18 of the fifth circuit interruption device 110.

Each energy storage element is integral with the secondary control unit of a respective one of the plurality of fifth switching devices. Optionally, in other embodiments, each energy storage element may be a separate component from the corresponding secondary control unit. In addition, in other embodiments, each energy storage element may be any device (other than a capacitor) that is capable of storing and releasing power, e.g. as a battery.

In the normal mode of operation of the fifth circuit interruption device 110, the driving transformer 62 is controlled to inject a ripple current into the secondary branch 14. The flow of the ripple current in the secondary branch 14 induces a voltage drop across the reactor of the electrical block of each fifth switching device and thereby enables the power extraction circuit of each fifth switching device to extract power from the ripple current flowing in the secondary branch 14. The extracted power is then stored in the energy storage element.

The first and second filter limbs 48,50 define line traps which provide a current loop return path 64 which passes through the secondary branch 14 of the fifth circuit interruption device 110 and the second filter limbs 50. This prevents the injected current from entering the main branch 12 of the fifth circuit interruption device 110 as well as the DC electrical networks 56a,56b..

In the fault mode of operation of the fifth circuit interruption device 110, each energy storage element is configured to release the stored power to drive the corresponding secondary control unit in order to turn off the corresponding normally-on switching element 28.

The provision of an energy storage element enables the circuit interruption device assembly to store power during the normal mode of operation to ensure that a required amount of power is available to drive each secondary control unit during the fault mode of operation. This reduces the reliance on the capability of the power extraction circuit to extract sufficient power solely from the fault current flowing in the secondary branch during the fault mode of operation, thus improving the reliability of the circuit interruption device.

Each energy storage element may be rated so that the stored power on its own or in combination with power extracted from the fault current in the fault mode of operation is sufficient to drive the corresponding secondary control unit.

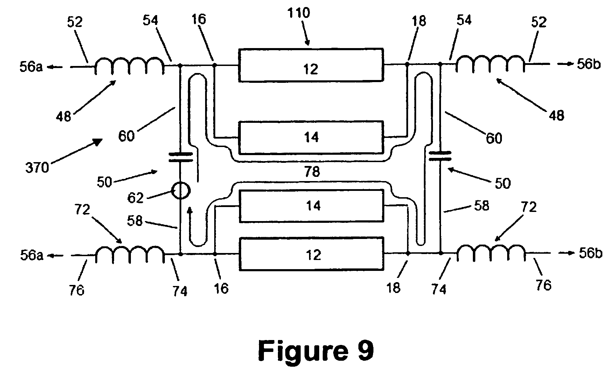

A fourth circuit interruption device assembly 370 according to an eighth embodiment of the invention is shown in Figure 9. The fourth circuit interruption device assembly 370 of Figure 9 is similar in structure and operation to the first circuit interruption device assembly 70 of Figure 6, and like features share the same reference numerals.

The fourth circuit interruption device assembly 370 differs from the first circuit interruption device assembly 70 in that the fourth circuit interruption device assembly 370 further includes a pair of third filter limbs 72 and an additional circuit interruption device 210.

Each third filter limb 72 has first and second ends 74,76. The first end 74 of each third filter limb 72 is connected to the first end 58 of a respective one of the second filter limbs 50. In use, the second end 76 of each third filter limb 72 is connected to another pole of a respective one of the pair of DC electrical networks 56a,56b. In this manner the current injection circuit is directly connected between different poles of the DC electrical networks 56a,56b.

A secondary branch 14 of the additional circuit interruption device 210 includes a plurality of series-connected additional switching devices. The additional circuit interruption device 210 is similar in terms of structure and operation to the fifth circuit interruption device 110, each additional switching device is similar in terms of structure and operation to each fifth switching device, and like features share the same reference numerals. The additional circuit interruption device 210 is connected between the first ends 58 of the second filter limbs 50.

In this manner the first, second and third filter limbs 48,50,72 define a current loop return path 78 which passes though the fifth circuit interruption device 110, the additional circuit interruption device 210 and the second filter limbs 50.

In the fault mode of operation of the fifth circuit interruption device 110, the driving transformer 62 is controlled to inject a ripple current into the secondary branch 14 of each of the fifth and additional circuit interruption devices 110,210. The flow of the ripple current in the secondary branch 14 of each of the fifth and additional circuit interruption devices 110,210 induces a voltage drop across the reactor of the electrical block of each of the fifth and additional switching devices and thereby enables the power extraction circuit of each of the fifth and additional switching devices to extract power from the ripple current flowing in the secondary branch 14 of each of the fifth and additional circuit interruption devices 110,210.

The configuration of the fourth circuit interruption assembly 370 therefore permits the use of a single current injection circuit with a plurality of circuit interruption devices 110,210 to permit reliable extraction of a required amount of power from the current flowing in the secondary branch 14 of each of the plurality of circuit interruption devices 110,210 through the injection of a suitable ripple current. This not only improves the reliability of the fifth and additional circuit interruption devices, but also improves the efficiency of the fifth and additional circuit interruption devices from a operating cost and hardware perspective.

## Claims

1. A circuit interruption device (10;110) comprising:
a main branch (12);
a secondary branch (14) having an electrical on-resistance which is higher than an electrical on-resistance of the main branch (12); and
first and second terminals (16,18) for connection, in use, to an electrical network (20), the main and secondary branches (12,14) extending between the first and second terminals (16,18);
wherein the main branch (12) includes a switching apparatus (22) which is switchable to selectively allow current to flow in the main branch (12) in a normal mode of operation or commutate current from the main branch (12) to the secondary branch (14) in a fault mode of operation, the circuit interruption device being **characterised in that** the secondary branch (14) includes at least one switching device (26), the or each switching device (26) including at least one normally-on switching element (28), the secondary branch (14) further including a control unit (30) in communication with the or each normally-on switching element (28), the secondary branch (14) further including a power extraction circuit (32) which is electrically coupled with the control unit (30),
wherein during the normal mode of operation the or each normally-on switching element (28) is in an on-state to permit the secondary branch (14) to conduct current, and during the fault mode of operation the control unit (30) controls the switching of the or each normally-on switching element (28) to an off-state to inhibit current flow in the secondary branch (14),
wherein the power extraction circuit (32) extracts power from current flowing in the secondary branch (14) to drive the control unit (30).

2. A circuit interruption device (10;110) according to Claim 1 wherein during the fault mode of operation, following commutation of current from the main branch (12) to the secondary branch (14), the power extraction circuit (32) extracts power from current flowing in the secondary branch (14) to drive the control unit (30).

3. A circuit interruption device (10;110) according to Claim 1 or Claim 2 wherein at least one normally-on switching element (28) is a semiconductor switching element.

4. A circuit interruption device (10;110) according to Claim 3 wherein the semiconductor switching element is a depletion-mode switching element.

5. A circuit interruption device (10;110) according to any preceding claim wherein at least one normally-on switching element (28) includes a wide-band-gap semiconductor material.

6. A circuit interruption device (10;110) according to any preceding claim wherein the power extraction circuit (32) includes an electrical block which is electrically coupled with the control unit (30), the electrical block being connected in the secondary branch (14) such that a voltage drop is generated across the electrical block when current flows in the secondary branch (14).

7. A circuit interruption device (10;110) according to Claim 6 wherein the electrical block includes at least one resistive element (38) and/or at least one inductive element.

8. A circuit interruption device (10;110) according to Claim 6 or Claim 7 wherein the electrical block is connected in series with at least one normally-on switching element (28).

9. A circuit interruption device (10;110) according to any of Claims 6 to 8 wherein the electrical block includes at least one normally-on switching element (28).

10. A circuit interruption device assembly (70;170;270;370) comprising:
a circuit interruption device (10;110) according to any preceding claim; and
a current injection circuit including:
at least one current source for injecting a current into the secondary branch (14) of the circuit interruption device (10;110); and
at least one filter limb (48) operably connected to the secondary branch (14) of the circuit interruption device (10;110) to inhibit the injected current from flowing, in use, into the electrical network (20).

11. A circuit interruption device assembly (70;170;270;370) according to Claim 10 wherein the or each filter limb (48) includes at least one inductive element, at least one capacitive element and/or at least one resistive element.

12. A circuit interruption device assembly (70;170;270;370) according to Claim 10 or Claim 11 wherein the current injection circuit includes:
a pair of first filter limbs (48), each first filter limb (48) having first and second ends (52,54), the first end (52) of each first filter limb (48) being connectable to the electrical network (20);
a pair of second filter limbs (50), each second filter limb (50) having first and second ends (58,60), the first end (58) of each second filter limb (50) being connectable to ground or the electrical network (20), the secondary branch (12) of the circuit interruption device (10;110) being connected with the second filter limbs (50) to define a π-configuration of the secondary branch (14) and second filter limbs (50) in which the secondary branch (14) extends between the second ends (60) of the second filter limbs (50), the π-configuration being connected between the first filter limbs (48) such that the second end (54) of each first filter limb (48) is connected to the second end (60) of a respective one of the second filter limbs (50).

13. A circuit interruption device assembly (70;170;270;370) according to Claim 12 wherein the first end (52) of each first filter limb (48) is connected to a respective one of the first and second terminals (16,18) of the circuit interruption device (10;110).

14. A circuit interruption device assembly (70;170;270;370) according to Claim 12 wherein the second end (54) of each first filter limb (48) is connected to a respective one of the first and second terminals (16,18) of the circuit interruption device (10;110).

15. A circuit interruption device assembly (370) according to Claim 14 further including a pair of third filter limbs (72), each third filter limb (72) having first and second ends (74,76), wherein the first end (74) of each third filter limb (72) is connected to the first end (58) of a respective one of the second filter limbs (50), and the second end (76) of each third filter limb (72) is connectable to the electrical network (20).

16. A circuit interruption device assembly (370) according to Claim 15 further including an additional circuit interruption device (210) according to any of Claims 1 to 9, the additional circuit interruption device (210) being connected between the first ends (58) of the second filter limbs (50).

17. A circuit interruption device assembly (70;170;270;370) according to any of Claims 12 to 16 wherein at least one of the second filter limbs (50) includes a current source.

18. A circuit interruption device assembly (70;170;270;370) according to any of Claims 12 to 17 wherein at least one current source is connected in series with the first and second terminals (16,18) between the second ends (60) of the second filter limbs (50).

19. A circuit interruption device assembly (70;170;270;370) according to any of Claims 10 to 18 including an energy storage element for storing and releasing power,
wherein during the normal mode of operation the or each current source injects a current into the secondary branch (14) and the power extraction circuit extracts power from the injected current for storage in the energy storage element, and
wherein during the fault mode of operation the energy storage element releases the stored power to drive the control unit (24).

20. A circuit interruption device assembly (70;170;270;370) according to Claim 19 wherein the energy storage element is integral with the control unit (24) or is a separate component from the control unit (24).

21. A circuit interruption device assembly (70;170;270;370) according to any of Claims 10 to 20 wherein during the fault mode of operation the or each current source injects a current into the secondary branch (14).

## Patentansprüche

1. Stromkreisunterbrechervorrichtung (10; 110), Folgendes umfassend:
einen Hauptzweig (12);
einen Nebenzweig (14) mit einem elektrischen Einschaltwiderstand, der höher ist als ein elektrischer Einschaltwiderstand im Hauptzweig (12); und
einen ersten und einen zweiten Kontakt (16, 18) zum Anschluss an ein elektrisches Netz (20) im Gebrauch, wobei sich der Haupt- und der Nebenzweig (12, 14) zwischen dem ersten und dem zweiten Kontakt (16, 18) erstrecken;
wobei der Hauptzweig (12) eine Schaltvorrichtung (22) enthält, die umschaltbar ist, um selektiv zu ermöglichen, dass in einem normalen Betriebsmodus Strom im Hauptzweig (12) fließt, oder dass in einem Fehlerbetriebsmodus Strom vom Hauptzweig (12) in den Nebenzweig (14) umgeleitet wird, wobei die Stromkreisunterbrechervorrichtung **dadurch gekennzeichnet ist, dass** der Nebenzweig (14) wenigstens ein Schaltgerät (26) enthält, wobei das oder jedes Schaltgerät (26) wenigstens ein normalerweise eingeschaltetes Schaltelement (28) enthält, wobei der Nebenzweig (14) ferner eine Steuereinheit (30) in Kommunikation mit dem oder jedem normalerweise eingeschalteten Schaltelement (28) enthält, wobei der Nebenzweig (14) ferner einen Leistungsauskopplungsschaltkreis (32) enthält, der elektrisch mit der Steuereinheit (30) gekoppelt ist,
wobei im normalen Betriebsmodus das oder jedes normalerweise eingeschaltete Schaltelement (28) in einem eingeschalteten Zustand ist, um zu ermöglichen, dass der Nebenzweig (14) Strom leitet, und im Fehlerbetriebsmodus die Steuereinheit (30) den Schaltvorgang des oder jedes normalerweise eingeschalteten Schaltelements (28) in einen ausgeschalteten Zustand umschaltet, um zu verhindern, dass Strom in den Nebenzweig (14) fließt,
wobei der Leistungsauskopplungsschaltkreis (32) Leistung aus dem im Nebenzweig (14) fließenden Strom auskoppelt, um die Steuereinheit (30) zu betreiben.

2. Stromkreisunterbrechervorrichtung (10; 110) nach Anspruch 1, wobei im Fehlerbetriebsmodus nach dem Umleiten von Strom aus dem Hauptzweig (12) in den Nebenzweig (14) der Leistungsauskopplungsschaltkreis (32) Leistung aus dem im Nebenzweig (14) fließenden Strom auskoppelt, um die Steuereinheit (30) zu betreiben.

3. Stromkreisunterbrechervorrichtung (10; 110) nach Anspruch 1 oder 2, wobei wenigstens ein normalerweise eingeschaltetes Schaltelement (28) ein Halbleiter-Schaltelement ist.

4. Stromkreisunterbrechervorrichtung (10; 110) nach Anspruch 3, wobei das Halbleiter-Schaltelement ein Verarmungs-Schaltelement ist.

5. Stromkreisunterbrechervorrichtung (10; 110) nach einem der vorhergehenden Ansprüche, wobei wenigstens ein normalerweise eingeschaltetes Schaltelement (28) ein Halbleitermaterial mit breitem Bandabstand enthält.

6. Stromkreisunterbrechervorrichtung (10; 110) nach einem der vorhergehenden Ansprüche, wobei der Leistungsauskopplungsschaltkreis (32) einen elektrischen Block enthält, der elektrisch mit der Steuereinheit (30) gekoppelt ist, wobei der elektrische Block derart an den Nebenzweig (14) angeschlossen ist, dass ein Spannungsabfall über den elektrischen Block erzeugt wird, wenn im Nebenzweig (14) Strom fließt.

7. Stromkreisunterbrechervorrichtung (10; 110) nach Anspruch 6, wobei der elektrische Block wenigstens ein Widerstandselement (38) und/oder wenigstens ein induktives Element enthält.

8. Stromkreisunterbrechervorrichtung (10; 110) nach Anspruch 6 oder 7, wobei der elektrische Block mit wenigstens einem normalerweise eingeschalteten Schaltelement (28) in Reihe geschaltet ist.

9. Stromkreisunterbrechervorrichtung (10; 110) nach einem der Ansprüche 6 bis 8, wobei der elektrische Block wenigstens ein normalerweise eingeschaltetes Schaltelement (28) enthält.

10. Stromkreisunterbrechervorrichtungsanordnung (70; 170; 270; 370), Folgendes umfassend:
eine Stromkreisunterbrechervorrichtung (10; 110) nach einem der vorhergehenden Ansprüche; und
einen Stromeinspeisungsstromkreis, Folgendes enthaltend:
wenigstens eine Stromquelle zum Einspeisen eines Stroms in den Nebenzweig (14) der Stromkreisunterbrechervorrichtung (10; 110); und
wenigstens einen Filterast (48), funktionsfähig mit dem Nebenzweig (14) der Stromkreisunterbrechervorrichtung (10; 110) verbunden, um zu verhindern, dass der eingespeiste Strom im Gebrauch in das Stromnetz (20) fließt.

11. Stromkreisunterbrechervorrichtungsanordnung (70; 170; 270; 370) nach Anspruch 10, wobei der oder jeder Filterast (48) wenigstens ein induktives Element, wenigstens ein kapazitives Element und/oder wenigstens ein Widerstandselement enthält.

12. Stromkreisunterbrechervorrichtungsanordnung (70; 170; 270; 370) nach Anspruch 10 oder 11, wobei der Stromeinspeisungsstromkreis Folgendes enthält:
ein Paar erster Filteräste (48), wobei jeder erste Filterast (48) ein erstes und ein zweites Ende (52, 54) aufweist, wobei das erste Ende (52) eines jeden Filterasts (48) mit dem Stromnetz (20) verbindbar ist;
ein Paar zweiter Filteräste (50), wobei jeder zweite Filterast (50) ein erstes und ein zweites Ende (58, 60) aufweist, wobei das erste Ende (58) eines jeden zweiten Filterasts (50) mit Masse oder mit dem Stromnetz (20) verbindbar ist, wobei der Nebenzweig (12) der Stromkreisunterbrechervorrichtung (10; 110) mit den zweiten Filterästen (50) verbindbar ist um eine π-Konfiguration des Nebenzweigs (14) und der zweiten Filteräste (50) zu definieren, in der der Nebenzweig (14) sich zwischen den zweiten Enden (60) der zweiten Filteräste (50) erstreckt, wobei die π-Konfiguration derart zwischen den ersten Filterästen (48) verbunden ist, dass das zweite Ende (54) eines jeden ersten Filterasts (48) mit dem zweiten Ende (60) eines entsprechenden der zweiten Filteräste (50) verbunden ist.

13. Stromkreisunterbrechervorrichtungsanordnung (70; 170; 270; 370) nach Anspruch 12, wobei das erste Ende (52) eines jeden ersten Filterasts (48) mit einem entsprechenden des ersten und des zweiten Kontakts (16, 18) der Stromkreisunterbrechervorrichtung (10; 110) verbunden ist.

14. Stromkreisunterbrechervorrichtungsanordnung (70; 170; 270; 370) nach Anspruch 12, wobei das zweite Ende (54) eines jeden ersten Filterasts (48) mit einem entsprechenden des ersten und des zweiten Kontakts (16, 18) der Stromkreisunterbrechervorrichtung (10; 110) verbunden ist.

15. Stromkreisunterbrechervorrichtungsanordnung (370) nach Anspruch 14, ferner ein Paar von dritten Filterästen (72) enthaltend, wobei jeder dritte Filterast (72) ein erstes und ein zweites Ende (74, 76) aufweist, wobei das erste Ende (74) eines jeden dritten Filterasts (72) mit dem ersten Ende (58) eines entsprechenden der zweiten Filteräste (50) verbunden ist und das zweite Ende (76) eines jeden dritten Filterasts (72) mit dem Stromnetz (20) verbindbar ist.

16. Stromkreisunterbrechervorrichtungsanordnung (370) nach Anspruch 15, ferner eine zusätzliche Stromkreisunterbrechervorrichtung (210) nach einem der Ansprüche 1 bis 9 enthaltend, wobei die zusätzliche Stromkreisunterbrechervorrichtung (210) zwischen den ersten Enden (58) der zweiten Filteräste (50) angeschlossen ist.

17. Stromkreisunterbrechervorrichtungsanordnung (70; 170; 270; 370) nach einem der Ansprüche 12 bis 16, wobei wenigstens einer der zweiten Filteräste (50) eine Stromquelle enthält.

18. Stromkreisunterbrechervorrichtungsanordnung (70; 170; 270; 370) nach einem der Ansprüche 12 bis 17, wobei wenigstens eine Stromquelle mit dem ersten und dem zweiten Kontakt (16, 18) zwischen den zweiten Enden (60) der zweiten Filteräste (50) in Reihe geschaltet ist.

19. Stromkreisunterbrechervorrichtungsanordnung (70; 170; 270; 370) nach einem der Ansprüche 10 bis 18, ein Energiespeicherelement zum Speichern und Freigeben von Energie enthaltend,
wobei im normalen Betriebsmodus die oder jede Stromquelle einen Strom in den Nebenzweig (14) einspeist und der Leistungsauskopplungsschaltkreis Leistung aus dem eingespeisten Strom auskoppelt, um sie im Energiespeicherelement zu speichern, und
wobei das Energiespeicherelement im Fehlerbetriebsmodus die gespeicherte Leistung freigibt, um die Steuereinheit (24) zu betreiben.

20. Stromkreisunterbrechervorrichtungsanordnung (70; 170; 270; 370) nach Anspruch 19, wobei das Energiespeicherelement mit der Steuereinheit (24) einstückig ausgebildet ist oder eine von der Steuereinheit (24) separate Komponente ist.

21. Stromkreisunterbrechervorrichtungsanordnung (70; 170; 270; 370) nach einem der Ansprüche 10 bis 20, wobei im Fehlerbetriebsmodus die oder jede Stromquelle einen Strom in den Nebenzweig (14) einspeist.

## Revendications

1. Dispositif d'interruption de circuit (10 ; 110) comprenant :
une branche principale (12) ;
une branche secondaire (14) ayant une résistance à l'état actif électrique qui est supérieure à une résistance à l'état actif électrique de la branche principale (12) ; et
des première et seconde bornes (16, 18) destinées à la connexion, en utilisation, à un réseau électrique (20), les branches principale et secondaire (12, 14) s'étendant entre les première et seconde bornes (16, 18) ;
dans lequel la branche principale (12) comprend un appareil de commutation (22) qui peut être commuté pour permettre sélectivement à du courant de circuler dans la branche principale (12) dans un mode de fonctionnement normal ou de faire passer du courant de la branche principale (12) à la branche secondaire (14) dans un mode de fonctionnement défaillant, le dispositif d'interruption de circuit étant **caractérisé en ce que** la branche secondaire (14) comprend au moins un dispositif de commutation (26), le ou chaque dispositif de commutation (26) incluant au moins un élément de commutation normalement actif (28), la branche secondaire (14) incluant en outre une unité de commande (30) en communication avec le ou chaque élément de commutation normalement actif (28), la branche secondaire (14) comprenant en outre un circuit d'extraction d'énergie (32) qui est électriquement couplé à l'unité de commande (30),
dans lequel pendant le mode de fonctionnement normal, le ou chaque élément de commutation normalement actif (28) est dans un état actif pour permettre à la branche secondaire (14) de conduire du courant, et, pendant le mode de fonctionnement défaillant, l'unité de commande (30) commande la commutation du ou de chaque élément de commutation normalement actif (28) à un état inactif pour empêcher la circulation de courant dans la branche secondaire (14),
dans lequel le circuit d'extraction d'énergie (32) extrait de l'énergie à partir de courant circulant dans la branche secondaire (14) pour entraîner l'unité de commande (30).

2. Dispositif d'interruption de circuit (10 ; 110) selon la revendication 1, dans lequel, pendant le mode de fonctionnement défaillant, à la suite de la commutation du courant de la branche principale (12) à la branche secondaire (14), l'unité d'extraction d'énergie (32) extrait de l'énergie à partir du courant circulant dans la branche secondaire (14) pour entraîner l'unité de commande (30).

3. Dispositif d'interruption de circuit (10 ; 110) selon la revendication 1 ou la revendication 2, dans lequel au moins un élément de commutation normalement actif (28) est un élément de commutation à semi-conducteur.

4. Dispositif d'interruption de circuit (10 ; 110) selon la revendication 3, dans lequel l'élément de commutation à semi-conducteur est un élément de commutation en mode d'appauvrissement.

5. Dispositif d'interruption de circuit (10 ; 110) selon l'une quelconque des revendications précédentes, dans lequel au moins un élément de commutation normalement actif (28) comprend un matériau semi-conducteur à large bande interdite.

6. Dispositif d'interruption de circuit (10 ; 110) selon l'une quelconque des revendications précédentes, dans lequel le circuit d'extraction d'énergie (32) comprend un bloc électrique qui est couplé électriquement à l'unité de commande (30), le bloc électrique étant connecté dans la branche secondaire (14) de sorte qu'une chute de tension est générée aux bornes du bloc électrique lorsque du courant circule dans la branche secondaire (14).

7. Dispositif d'interruption de circuit (10 ; 110) selon la revendication 6, dans lequel le bloc électrique comprend au moins un élément résistif (38) et/ou au moins un élément inductif.

8. Dispositif d'interruption de circuit (10 ; 110) selon la revendication 6 ou la revendication 7, dans lequel le bloc électrique est connecté en série à au moins un élément de commutation normalement actif (28).

9. Dispositif d'interruption de circuit (10 ; 110) selon l'une quelconque des revendications 6 à 8, dans lequel le bloc électrique comprend au moins un élément de commutation normalement actif (28).

10. Ensemble de dispositif d'interruption de circuit (70 ; 170 ; 270 ; 370) comprenant :
un dispositif d'interruption de circuit (10 ; 110) selon l'une quelconque des revendications précédentes ; et
un circuit d'injection de courant comprenant :
au moins une source de courant destinée à injecter un courant dans la branche secondaire (14) du dispositif d'interruption de circuit (10 ; 110) ; et
au moins un organe de filtre (48) opérationnellement connecté à la branche secondaire (14) du dispositif d'interruption de circuit (10 ; 110) pour empêcher le courant injecté de circuler, en utilisation, dans le réseau électrique (20).

11. Ensemble de dispositif d'interruption de circuit (70 ; 170 ; 270 ; 370) selon la revendication 10, dans lequel le ou chaque organe de filtre (48) comprend au moins un élément inductif, au moins un élément capacitif et/ou au moins un élément résistif.

12. Ensemble de dispositif d'interruption de circuit (70 ; 170 ; 270 ; 370) selon la revendication 10 ou la revendication 11, dans lequel le circuit d'injection de courant comprend :
une paire de premiers organes de filtre (48), chaque premier organe de filtre (48) ayant des première et seconde extrémités (52, 54), la première extrémité (52) de chaque premier organe de filtre (48) pouvant être connectée au réseau électrique (20) ;
une paire de deuxièmes organes de filtre (50), chaque deuxième organe de filtre (50) ayant des première et seconde extrémités (58, 60), la première extrémité (58) de chaque deuxième organe de filtre (50) pouvant être connectée à la terre ou au réseau électrique (20), la branche secondaire (12) du dispositif d'interruption de circuit (10 ; 110) étant connectée aux deuxièmes organes de filtre (50) pour définir une configuration n de la branche secondaire (14) et des deuxièmes organes de filtre (50) dans laquelle la branche secondaire (14) s'étend entre les secondes extrémités (60) des deuxièmes organes de filtre (50), la configuration n étant connectée entre les premiers organes de filtre (48) de sorte que la seconde extrémité (54) de chaque premier organe de filtre (48) est connectée à la seconde extrémité (60) d'un organe respectif des deuxièmes organes de filtre (50).

13. Ensemble de dispositif d'interruption de circuit (70 ; 170 ; 270 ; 370) selon la revendication 12, dans lequel la première extrémité (52) de chaque premier organe de filtre (48) est connectée à l'une respective des première et seconde bornes (16, 18) du dispositif d'interruption de circuit (10 ; 110).

14. Ensemble de dispositif d'interruption de circuit (70 ; 170 ; 270 ; 370) selon la revendication 12, dans lequel la seconde extrémité (54) de chaque premier organe de filtre (48) est connectée à l'une respective des première et seconde bornes (16, 18) du dispositif d'interruption de circuit (10 ; 110).

15. Ensemble de dispositif d'interruption de circuit (370) selon la revendication 14, comprenant en outre une paire de troisièmes organes de filtre (72), chaque troisième organe de filtre (72) ayant des première et seconde extrémités (74, 76), dans laquelle la première extrémité (74) de chaque troisième organe de filtre (72) est connectée à la première extrémité (58) de l'un respectif des deuxièmes organes de filtre (50), et la seconde extrémité (76) de chaque troisième organe de filtre (72) peut être connectée au réseau électrique (20).

16. Ensemble de dispositif d'interruption de circuit (370) selon la revendication 15, comprenant en outre un dispositif d'interruption de circuit supplémentaire (210) selon l'une quelconque des revendications 1 à 9, le dispositif d'interruption de circuit supplémentaire (210) étant connecté entre les premières extrémités (58) des deuxièmes organes de filtre (50).

17. Ensemble de dispositif d'interruption de circuit (70 ; 170 ; 270 ; 370) selon l'une quelconque des revendications 12 à 16, dans lequel au moins l'un des deuxièmes organes de filtre (50) comprend une source de courant.

18. Ensemble de dispositif d'interruption de circuit (70 ; 170 ; 270 ; 370) selon l'une quelconque des revendications 12 à 17, dans lequel au moins une source de courant est connectée en série aux première et seconde bornes (16, 18) entre les secondes extrémités (60) des deuxièmes organes de filtre (50).

19. Ensemble de dispositif d'interruption de circuit (70 ; 170 ; 270 ; 370) selon l'une quelconque des revendications 10 à 18, comprenant un élément de stockage d'énergie destiné à stocker et libérer de l'énergie,
dans lequel, pendant le mode de fonctionnement normal, la ou chaque source de courant injecte un courant dans la branche secondaire (14) et le circuit d'extraction d'énergie extrait de l'énergie à partir du courant injecté pour un stockage dans l'élément de stockage d'énergie, et
dans lequel, pendant le mode de fonctionnement défaillant, l'élément de stockage d'énergie libère l'énergie stockée pour entraîner l'unité de commande (24).

20. Ensemble de dispositif d'interruption de circuit (70 ; 170 ; 270 ; 370) selon la revendication 19, dans lequel l'élément de stockage d'énergie est solidaire avec l'unité de commande (24) ou est un composant séparé de l'unité de commande (24).

21. Ensemble de dispositif d'interruption de circuit (70 ; 170 ; 270 ; 370) selon l'une quelconque des revendications 10 à 20, dans lequel, pendant le mode de fonctionnement défaillant, la ou chaque source de courant injecte un courant dans la branche secondaire (14).
